(19) Europäisches Patentamt
European Patent Office
Office européen des brevets

(11) Veröffentlichungsnummer: **0 220 133**
**A2**

(12) # EUROPÄISCHE PATENTANMELDUNG

(21) Anmeldenummer: 86810454.8

(22) Anmeldetag: 15.10.86

(51) Int.Cl.[4]: C 08 G 59/18
C 08 G 59/50

(30) Priorität: 21.10.85 CH 4516/85

(43) Veröffentlichungstag der Anmeldung:
29.04.87 Patentblatt 87/18

(84) Benannte Vertragsstaaten:
CH DE FR GB IT LI NL

(71) Anmelder: CIBA-GEIGY AG
Klybeckstrasse 141
CH-4002 Basel(CH)

(72) Erfinder: Schneider, Wolfgang
Liebrütistrasse 24.141
CH-4303 Kaiseraugst(CH)

(72) Erfinder: Amsler, Kurt
Leimenstrasse 78/2
CH-4051 Basel(CH)

(54) **Härtungsmittel für Epoxidharze und dessen Verwendung.**

(57) Härtungsmittel für Epoxidharze enthaltend
(a) ein epoxidgruppenfreies Addukt, erhältlich durch Umsetzung von 3 - 8 Mol 4, 4'-Diaminodiphenylmethan, bzw. eines Anilin/Formaldehyd-Kondensationsproduktes, mit 1 Mol eines flüssigen aromatischen Epoxidharzes und
(b)(i) ein oder mehrere Amine der Formeln I oder II

$H_2N-\!\!\left(CH_2CH_2NH\right)_n\!-CH_2CH_2NH_2$ mit n = 1-8 (I),

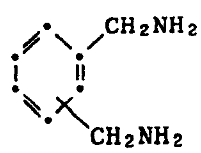

(II)

oder
(ii) ein epoxidgruppenfreies Addukt erhältlich durch Umsetzung von mindestens 2 Mol eines oder mehrerer der unter (i) definierten Amine mit 1 Mol eines flüssigen aromatischen Epoxidharzes,
wobei das Verhältnis der Komponenten (a) und (b) so gewählt wird, dass 60-90% der Aminwasserstoffatome von der Komponente (a) und 40 - 10% der Aminwasserstoffatome von der Komponente (b) stammen.
Die mit dem erfindungsgemässen Härtungsmittel vernetzten Epoxidharze zeichnen sich durch gute Eigenschaften, z.B. durch eine hohe Chemikalienbeständigkeit, insbesondere gegenüber Methanol, wässrigem Methanol und Methanol/Ameisensäure/Wasser-Gemischen ("Methanol crude") aus.

EP 0 220 133 A2

CIBA-GEIGY AG
Basel (Schweiz)

3-15539/+

# Härtungsmittel für Epoxidharze und dessen Verwendung

Die Erfindung betrifft ein Härtungsmittel für Epoxidharze enthaltend epoxidgruppenfreie Addukte bestimmter Amine mit bestimmten Epoxidharzen und gegebenenfalls zusätzlich noch bestimmte freie Amine, sowie dessen Verwendung, z.B. zur Herstellung chemikalienbeständiger Ueberzüge.

Addukte von Aminen mit Epoxidharzen werden seit langem als Härtungsmittel für Epoxidharze verwendet. Die Vorteile der Verwendung von Addukten liegen in deren kleinerer Flüchtigkeit im Vergleich mit den freien Aminen, wodurch die Umwelt weniger belastet wird. Solche Addukte werden z.B. im Lee und Neville, Handbook of Epoxy Resins, Mc Graw Hill (1967) beschrieben.

Die EP-A-0 044 816 beschreibt Addukte von Aminen mit Epoxidharzen einer Funktionalität höher als zwei und zwar mit Epoxykresolnovolaken oder mit Triglycidyl-p-aminophenol. Eine Vielzahl von Aminen wird eingesetzt, wobei nie Addukte von aromatischen Aminen zusammen mit aliphatischen Aminen oder deren Addukten verwendet werden. Die US 3,655,624 beschreibt härtbare Epoxidharzformmassen, die kristalline Addukte von Aminen mit Triglycidylisocyanurat als Härter enthalten. Die US 2,948,688 beschreibt härtbare Stoffgemische enthaltend 4-Vinylcyclohexendioxid und polyfunktionelle Amine. Als polyfunktionelle Amine werden auch Additionsprodukte von Polyaminen

mit niedermolekularen Epoxidharzen verwendet. Die DE-AS 1 041 688 beschreibt die Verwendung von Addukten von aromatischen Polyaminen oder deren Gemischen mit Monoepoxidverbindungen als Härter für Epoxidharze.

Es wurde nun gefunden, dass Härtungsmittel, welche sowohl epoxidgruppenfreie Addukte eines bestimmten aromatischen Amins mit bestimmten Epoxidharzen als auch bestimmte aliphatische oder araliphatische Amine bzw. deren Addukte mit bestimmten Epoxidharzen enthalten, bei ihrer Verwendung mit Epoxidharzen zu vernetzten Produkten mit überlegenen Eigenschaften führen.

Gegenstand der vorliegenden Erfindung sind Härtungsmittel für Epoxidharze enthaltend

(a) ein epoxidgruppenfreies Addukt, erhältlich durch Umsetzung von 3-8 Mol 4,4'-Diaminodiphenylmethan bzw. eines Anilin/Formaldehyd-Kondensationsproduktes, wie "DDM crude", mit 1 Mol eines oder mehrerer flüssiger aromatischer Epoxidharze auf der Basis von Bisphenol A, Bisphenol F oder eines niedermolekularen epoxidierten Phenol- oder Kresolnovolakes und

(b)(i) ein oder mehrere Amine der Formeln I oder II

$H_2N-[CH_2CH_2NH]_n-CH_2CH_2NH_2$ mit n = 1-8 (I),

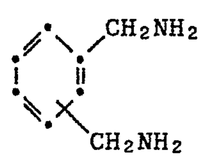

(II)

oder

(ii) ein epoxidgruppenfreies Addukt erhältlich durch Umsetzung von mindestens 2 Mol eines oder mehrerer der unter (i) definierten Amine mit 1 Mol eines unter (a) definierten Epoxidharzes,

wobei das Verhältnis der Komponenten (a) und (b) so gewählt wird, dass 60-90 % der Aminwasserstoffatome von der Komponente (a) und 40-10 % der Aminwasserstoffatome von der Komponente (b) stammen.

Ein weiterer Gegenstand der Erfindung sind härtbare Epoxidharz-Stoffgmische enthaltend ein definitionsgemässes Härtungsmittel und ein Epoxidharz.

Die erfindungsgemässen härtbaren Stoffgemische eignen sich z.B. für die Herstellung geformter Gegenstände, als Klebstoffe, Kitte, Dichtungsmassen, Einbettungs- und Isoliermassen für die Elektronik oder Matrixharze, und insbesondere im Oberflächenschutz. Die ausgehärteten Produkte zeichnen sich durch gute mechanische Eigenschaften und besonders durch eine sehr gute Chemikalienbeständigkeit aus.

Ein bevorzugtes Anwendungsgebiet der erfindungsgemässen Härtungsmittel bzw. Epoxidharz-Stoffgemische ist daher deren Verwendung zur Herstellung chemikalienbeständiger gehärteter Ueberzüge. Die Ueberzüge sind insbesondere beständig gegen reines und gegen wässriges Methanol, sowie gegen Gemische aus Methanol/Ameisensäure/Wasser, wie z.B. das "Methanol crude" ($CH_3OH/HCOOH/H_2O$ = 95/3/2 Gew.%). Da die erfindungsgemässen Epoxidharzstoffgemische bei Raumtemperatur gehärtet werden können, sind sie besonders als Rohstoffe zur Formulierung von Beschichtungsstoffen zur Innenauskleidung von Chemikalientankschiffen und Lagerbehältern für den Transport bzw. die Lagerung von reinem und/oder technischem (crude) Methanol geeignet. Es kommen auch andere Methanol enthaltende Füllgüter, wie z.B. Gasohol (Methanol enthaltendes bleifreies Benzin) und Treibstoffgemische in Betracht.

Das Molverhältnis des Amins zum Epoxidharz in den epoxidgruppenfreien Addukten (a) und (b)(ii) des erfindungsgemässen Härtungsmittels sollte gross genug sein, d.h. grösser als 3 bzw. 2 für (a)

bzw. (b)(ii), um eine Gelierung des Gemisches zu vermeiden. Beim Addukt (a) wird wegen der schlechten Löslichkeit des Amins in Epoxidharzen auch eine obere Grenze (bis 8) angegeben.

Im erfindungsgemässen Härtungsmittel ist das epoxidgruppenfreie Addukt (a) vorzugsweise durch Umsetzung von 4-7,5, insbesondere von 4,5-5,5, Mol des Amins mit 1 Mol des Epoxidharzes erhältlich. Unter "DDM crude" wird 4,4'-Diaminodiphenylmethan verstanden, welches bis zu 20 Gew.% von höheren Anilin/Formaldehyd Kondensationsprodukten enthält.

Als Epoxidharze im epoxidgruppenfreien Addukt (a) werden vorzugsweise Harze auf der Basis von Bisphenol A verwendet.

Als Amine der Formel I kommen z.B. Diethylentriamin, Triethylentetramin, Tetraethylenpentamin und Pentethylenhexamin in Frage. Bei den Aminen der Formel II kann es sich um Xylylendiamin-Isomerengemische oder um reines o-, m- oder p-Xylylendiamin handeln. Besonders bevorzugte Amine der Formeln I oder II der Komponente (b) des erfindungsgemässen Härtungsmittels sind Diethylentriamin und m-Xylylendiamin.

Das epoxidgruppenfreie Addukt (b) (ii) des Härtungsmittels ist bevorzugt durch Umsetzung von 2-15, insbesondere von 4-9, Mol des Amins mit 1 Mol des Epoxidharzes erhältlich. Das bevorzugte Epoxidharz im Addukt (b) (ii) ist ein Harz auf der Basis von Bisphenol A.

Ganz besonders bevorzugt sind erfindungsgemässe Härtungsmittel, worin das epoxidgruppenfreie Addukt (a) durch Umsetzung von 4,6 bis 5,0 Mol 4,4'-Diaminodiphenylmethan mit 1 Mol eines Epoxidharzes auf der Basis von Bisphenol A erhältlich ist, und die Komponente (b)(i) m-Xylylendiamin oder (b)(ii) ein epoxidgruppenfreies Addukt, erhältlich durch Umsetzung von 7 bis 8 Mol Diethylentriamin mit einem Mol eines Epoxidharzes auf der Basis von Bisphenol A, ist.

Im erfindungsgemässen Härtungsmittel wird vorzugsweise das Verhältnis der Komponenten (a) und (b) so gewählt, dass 65-85 %, insbesondere 75-85 %, der Aminwasserstoffatome von der Komponente (a) und die restlichen Aminwasserstoffatome von der Komponente (b) stammen.

Die erfindungsgemässen Härtungsmittel enthalten vorzugsweise zusätzlich zu den Komponenten (a) und (b) noch Härtungsbeschleuniger und/oder inerte in der Lackindustrie übliche Lösungsmittel. Als Härtungsbeschleuniger können vorzugsweise Phenol- oder Kresolnovolake, Bisphenol F und insbesondere Bisphenol A eingesetzt werden. Bevorzugt werden 1-15, insbesondere 2-10, Gew.% des Beschleunigers, bezogen auf das Gesamthärtungsmittel, verwendet. Als Lösungsmittel kommen z.B. Aromaten, wie Toluol, Xylol, Mesitylen, Alkohole, vorzugsweise mit 1 bis 4 Kohlenstoffatomen, wie Methanol, Ethanol n- oder iso-Propanol und Butanole, Ketone, wie Aceton, Methylethylketon usw., bzw. deren Gemische in Frage. Besonders bevorzugte Lösungsmittel sind Xylol (als Isomerengemisch, wie das handelsübliche technische Xylol mit o-/m-/p-/ =
ca. 0-30/40-80/0-20 %, oder in Form einzelner Isomeren) und n-Butanol. Als besonders geeignet hat sich ein 4:1 Gemisch von Xylol und n-Butanol erwiesen. Die Lösungsmittel werden dem erfindungsgemässen Härtungsmittel, falls nötig, in einer solchen Menge zugegeben, dass eine für die beabsichtigte Verwendung geeignete Konsistenz erreicht wird. Vorzugsweise weist das Härtungsmittel einen Festkörperanteil von mehr als 60 %, insbesondere von mehr als 80 %, auf.

Die in den erfindungsgemässen härtbaren Stoffgemischen verwendeten Epoxidharze können fest oder flüssig sein und haben vorzugsweise einen Epoxidgehalt von 0,5 bis 12, insbesondere von 4 bis 7 Aequivalenten pro kg. Insbesondere seien genannt:
Alicyclische Polyepoxide, wie Epoxyethyl-3,4-epoxycyclohexan (Vinylcyclohexendiepoxid), Limonendiepoxid, Dicyclopentadiendiepoxid, Bis(3,4-epoxycyclohexylmethyl)adipat, 3',4'-Epoxycyclohexylmethyl-3,4-epoxycyclohexancarboxylat, 3',4'-Epoxy-6'-methyl-

cyclohexylmethyl-3,4-epoxy-6-methylcyclohexancarboxylat, 3-(3',4'-Epoxycyclohexyl)-2,4-dioxaspiro[5,5]-8,9-epoxyundecan, 3-Glycidyloxyethoxyethyl-2,4-dioxaspiro[5,5]-8,9-epoxyundecan.

Di- oder Polyglycidylether von mehrwertigen Alkoholen, wie 1,4-Butandiol oder Polyalkylenglykolen, wie Polypropylenglykole, Di-oder Polyglycidylether von cycloaliphatischen Polyolen, wie 2,2-Bis(4-hydroxycyclohexyl)propan, Di- oder Polyglycidylether von mehrwertigen Phenolen, wie Resorcin, Bis(p-hydroxyphenyl)methan (Bisphenol F), 2,2-Bis(p-hydroxyphenyl)propan (Bisphenol A), 2,2-Bis-(4'-hydroxy-3',5'-dibromphenyl)propan, 1,1,2,2-Tetrakis(p-hydroxyphenyl)ethan, oder von unter saueren Bedingungen erhaltenen Kondensationsprodukten von Phenolen mit Formaldehyd, wie Phenol-Novolake und Kresol-Novolake; ferner Di- oder Poly(ß-methylglycidyl)ether der oben angeführten Polyalkohole und Polyphenole.

Polyglycidylester und Poly(ß-methylglycidyl)ester von mehrwertigen Carbonsäuren, wie Phthalsäure, Terephthalsäure, Tetrahydrophthalsäure und Hexahydrophthalsäure.

N-Glycidylderivate von Aminen, Amiden und heterocyclischen Stickstoffbasen, wie N,N-Diglycidylanilin, N,N-Diglycidyltoluidin, N,N,N',N'-Tetraglycidyl-bis(p-aminophenyl)methan, Triglycidylisocyanurat, N,N'-Diglycidylethylenharnstoff, N,N'-Diglycidyl-5,5-dimethylhydantoin, N,N'-Diglycidyl-5-isopropylhydantoin, N,N'-Diglycidyl-5,5-dimethyl-6-isopropyl-5,6-dihydrouracil.

Bevorzugt werden als Epoxidharze in den erfindungsgemässen härtbaren Stoffgemischen flüssige bis halbfeste (solche mit einem Schmelzpunkt in der Nähe der Raumtemperatur) aromatische Harze auf der Basis von Bisphenol A, Bisphenol F, epoxidierte Phenol- oder Kresolnovolake oder Gemische dieser Harze verwendet.

Die zu verwendende Menge des Härtungsmittels in den erfindungsgemässen härtbaren Stoffgemischen wird vorzugsweise so gewählt, dass pro Epoxidgruppe des Harzes 0,8-1,1, insbesondere 1,0, Aminwasserstoffatome des Härtungsmittels vorliegen.

Gewünschtenfalls kann man den härtbaren Gemischen zur Herabsetzung der Viskosität aktive Verdünner, wie z.B. Styroloxid, Butylglycidylether, 2,2,4-Trimethylpentylglycidylether, Phenylglycidylether, Kresylglycidylether, Glycidylester von synthetischen, hochverzweigten, in der Hauptsache tertiären aliphatischen Monocarbonsäuren zusetzen.

Man kann bei der Härtung zusätzlich zum gegebenenfalls schon im erfindungsgemässen Härtungsmittel vorhandenen Beschleuniger noch weitere Härtungsbeschleuniger einsetzen; solche Beschleuniger sind z.B. tertiäre Amine, deren Salze oder quaternäre Ammoniumverbindungen, z.B. Benzyldimethylamin, 2,4,6-Tris-(dimethylaminomethyl)-phenol, 1-Methylimidazol, 2-Ethyl-4-methylimidazol, 4-Aminopyridin, Tripentylammoniumphenolat; oder Alkalimetallalkoholate, wie z.B. Natriumhexantriolat.

Die erfindungsgemässen härtbaren Gemische können ferner geeignete Weichmacher, wie Dibutylphthalat, Dioctylphthalat oder Trikresylphthalat, enthalten.

Schliesslich können die erfindungsgemässen härtbaren Gemische vor der Härtung in irgendeiner Phase mit Streck-, Füll- und Verstärkungsmitteln, wie beispielsweise Steinkohlenteer, Bitumen, Textilfasern, Glasfasern, Asbestfasern, Borfasern, Kohlenstoffasern, mineralischen Silikaten, Glimmer, Quarzmehl, Aluminiumoxidhydrat, Bentoniten, Kaolin, Kieselsäureaerogel, Bariumsulfat oder Metallpulver, z.B. Aluminiumpulver oder Eisenpulver, ferner mit Pigmenten und Farbstoffen, wie Russ, Oxidfarben, wie Titandioxid, Eisen(III)-oxid, Chrom(III)oxid u.a. versetzt werden. Man kann den härtbaren Gemischen ferner auch andere übliche Zusätze, z.B. Flammschutzmittel, wie Antimontrioxid, Thixotropiemittel, Verlaufmittel ("flow control agents"), wie Silicone, Wachse oder Stearate (welche zum Teil auch als Formtrennmittel Anwendung finden), zusetzen.

Die Herstellung der erfindungsgemässen härtbaren Mischungen kann in üblicher Weise mit Hilfe bekannter Mischaggregate (Rührer, Kneter, Walzen etc.) erfolgen.

In den folgenden Beispielen werden einige erfindungsgemässe Härtungsmittel und härtbare Epoxidharzstoffgemische sowie deren Anwendung und Eigenschaften illustriert.

I. Herstellung epoxidgruppenfreier Addukte aus Aminen und Epoxidharzen

Beispiel 1: Addukt aus 4,4'-Diaminodiphenylmethan (DDM) und Bisphenol A Diglycidylether, (Addukt 1)

572 g DDM, 160 g Xylol (handelsübliches Monomerengemisch, o/m/p = ca. 0-30/40-80/0-20 %) und 40 g n-Butanol werden bei Raumtemperatur in einem Sulfierkolben vorgelegt und unter Stickstoff und Rühren aufgeheizt. Sobald das DDM klar gelöst ist (100°C), werden langsam 228 g eines auf 60°C vorgewärmten Bisphenol A Diglycidylethers mit einem Epoxidgehalt von 5,25 Aequivalenten/kg und einer Viskosität bei 25°C von 14000 mPa s beigegeben. Die Harzzugabe wird so gesteuert, dass die Temperatur des Reaktionsgemisches 120°C nicht überschreitet. Nach 30 min Reaktionszeit wird das Reaktionsgemisch auf 40°C abgekühlt und durch einen Filter ausgeladen. Das Produkt weist folgende Eigenschaften auf:

| | |
|---|---|
| Viskosität bei 25°C (Hoeppler): | 4800 mPa s |
| Amingehalt: | 5,77 Val/kg |
| Farbzahl nach Gardner: | 18 |
| Festkörpergehalt: | 80 % |

Beispiel 2: Addukt aus Diethylentriamin und Bisphenol A Diglycidylether unter Zugabe von Bisphenol A (Addukt 2)

493 g Diethylentriamin und 270 g Bisphenol A werden bei Raumtemperatur in einem Sulfierkolben vorgelegt und unter Stickstoff und Rühren auf 90-100°C aufgeheizt, wobei eine klare Lösung entsteht. Dieser Lösung werden langsam 237 g eines auf 60°C vorgewärmten Bisphenol A Diglycidylethers mit einem Epoxidgehalt von 5,30 Aequivalenten/kg und einer Viskosität bei 25°C von 11000 mPa s beigegeben. Die Harzzugabe wird so gesteuert, dass die Temperatur des Reaktionsgemisches 110°C nicht überschreitet. Nach 15 min Reaktionszeit wird das Reaktionsgemisch abgekühlt und ausgeladen. Das Produkt weist folgende Eigenschaften auf:

| | |
|---|---|
| Viskosität bei 25°C (Hoeppler): | 4200 mPa s |
| Amingehalt: | 14,36 Val/kg |
| Farbzahl nach Gardner: | < 10 |

Beispiel 3-5: Herstellung der Addukte 3-5

Die unten angegebenen Komponenten wurden gemäss dem im Beispiel 2 beschriebenen Verfahren zu epoxidfreien Addukten 3-5 umgesetzt.

| | Addukt 3 | Addukt 4 | Addukt 5 |
|---|---|---|---|
| Triethylentetramin (g) | 305 | - | - |
| Bisphenol A Diglycidylether (g)<br>Epoxidgehalt 5,25 Val/kg<br>Viskosität (25°C) 14000 mPa s | 396 | - | - |
| Xylol (g) | 247 | - | - |
| Butanol (g) | 52 | - | - |
| Tetraethylenpentamin (g) | - | 806 | - |
| Epoxyphenolnovolak (g)<br>Epoxidgehalt 5,60 Val/kg<br>Viskosität (50°C) 40000 mPa s | - | 194 | - |
| Pentaethylenhexamin (g) | - | - | 833 |
| Epoxyphenolnovolak (g)<br>Epoxidgehalt 5,70 Val/kg<br>Viskosität (50°C) 1400 mPa s | - | - | 167 |

Die so erhaltenen Addukte weisen folgende Eigenschaften auf:

| | Addukt 3 | Addukt 4 | Addukt 5 |
|---|---|---|---|
| Viskosität (Hoeppler) bei 25°C (mPa s) | 8200 | 2200 | 2900 |
| Amingehalt (Val/kg) | 7,6 | 17,4 | 16,7 |
| Farbzahl nach Gardner | 6 | 3 | 6 |

## II. Herstellung der erfindungsgemässen Härtungsmittel

### Beispiele I-X

Die Härtungsmittel I-X werden durch Zusammenmischen der eingesetzten Komponenten (Addukte bzw. freie Amine) hergestellt.

Die Zusammensetzung der Härtungsmittel I-X gemäss den Beispielen I-X und deren Eigenschaften sind aus Tabelle 1 ersichtlich.

Tabelle 1

| | Beispiel/ Härtungsmittel | | | | | | | | | |
|---|---|---|---|---|---|---|---|---|---|---|
| | I | II | III | IV | V | VI | VII | VIII | IX | X |
| Addukt 1 (g) | 913 | 913 | 800 | 808 | 913 | 913 | 955 | 944 | 933 | 933 |
| Addukt 2 (g) | - | 87 | 200 | - | - | - | - | - | - | - |
| Addukt 3 (g) | - | - | - | 192 | - | - | - | - | - | - |
| Addukt 4 (g) | - | - | - | - | 87 | - | - | - | - | - |
| Addukt 5 (g) | - | - | - | - | - | - | - | - | - | - |
| m-Xylylendiamin (g) | 87 | - | - | - | - | 87 | - | - | - | - |
| Diethylentriamin (g) | - | - | - | - | - | - | - | - | - | - |
| Triethylentetramin (g) | - | - | - | - | - | - | 45 | - | - | - |
| Tetraethylenpentamin (g) | - | - | - | - | - | - | - | 56 | - | - |
| Pentaethylenhexamin (g) | - | - | - | - | - | - | - | - | 67 | - |
| | | | | | | | | | | 67 |
| Amingehalt (Val/kg) | 6,61 | 6,54 | 7,37 | 6,15 | 6,85 | 6,95 | 6,80 | 6,85 | 6,95 | 6,90 |
| Viskosität, 25°C (mPa s) | 2520 | 7430 | 10400 | 7500 | 9900 | 9100 | 3900 | 4900 | 4700 | 7400 |
| Farbzahl nach Gardner | 18 | 18 | 18 | 14 | 15 | 14 | 15 | 15 | 15 | 15 |
| Festkörpergehalt (%) | 82 | 82 | 84 | 79 | 82 | 82 | 81 | 81 | 82 | 82 |
| $H^+$aktiv Aequivalentgewicht | 87 | 87 | 76 | 98 | 87 | 87 | 83 | 84 | 85 | 85 |

## III. Applikationsbeispiele

### Beispiel A1

46 g des Härtungsmittels I gemäss Beispiel I werden mit 100 g eines Bisphenol A Diglycidylethers mit einem Epoxidgehalt von 5,33 Aequivalenten/kg und einer Viskosität bei 25°C von 11000 mPa s bei Raumtemperatur gemischt. Sobald das Gemisch homogen d.h. schlierenfrei ist, wird es auf sandgestrahltes Stahlblech, dessen Rauhtiefe 30 - 50 µm beträgt, appliziert. Die Filmdicke beträgt 250 - 300 µm. Die Beschichtung lässt man 10 Tage bei 20°C härten. Nach Ablauf dieser Härtungszeit wird die Prüfplatte in einen Chemikalientester eingespannt (Prüfeinrichtung vorgestellt am IX Fatipec Kongress, Montreux 1968) und die Beschichtung gegen die Einwirkung von reinem Methanol, "Methanol crude" (ein Gemisch aus 95 Gew.% Methanol, 3 Gew.% Ameisensäure und 2 Gew.% Wasser) und Methanol 90 % in Wasser über 12 Monate geprüft. Die Prüfplatten werden monatlich beurteilt und die Testlösung bei dieser Gelegenheit erneuert. Die Beurteilung erfolgt visuell. Besonderes Augenmerk gilt der Härte, der Neigung zum Quellen und der Blasenbildung.

Der Ueberzug zeichnet sich durch völlige Beständigkeit gegen die genannten Testlösungen aus, d.h. es kann auch nach 12-monatiger Immersion weder ein Erweichen der Beschichtung, noch ein Quellen oder gar Blasenbildung an der Beschichtung beobachtet werden.

### Beispiele A2 und A3

Die folgenden Formulierungen werden nach der im Beispiel A1 beschriebenen Methode appliziert und getestet:

Tabelle 2

| | Beispiel | |
|---|---|---|
| | A2 | A3 |
| Härtungsmittel II (g) (gemäss Beispiel II) | 46 | - |
| Härtungsmittel III (g) (gemäss Beispiel III) | - | 40 |
| Bisphenol A Diglycidylether (g) Epoxidgehalt 5,33 Val/kg Viskosität (25°C) 11000 mPa s | 100 | 100 |

Die getesteten Ueberzüge zeichnen sich durch völlige Beständigkeit gegen reines Methanol, "Methanol crude" und 90 % Methanol in Wasser aus. Nach 12-monatiger Immersion kann keine Veränderung an der Beschichtung beobachtet werden.

Beispiele A4 bis A13: Pigmentierte Formulierungen

100 g eines Bisphenol A Diglycidylethers mit einem Epoxidgehalt von 5,33 Aequivalenten/kg und einer Viskosität bei 25°C von 11000 mPas werden mit 40 g Eisenoxidrot 130F® (Bayer AG, Leverkusen) und 60 g Bariumsulfat (Sachtleben Chemie GmbH., Homberg, BRD) gemischt und anschliessend mittels eines Dissolver-Geräts und eines Dreiwalzenstuhles dispergiert, so dass eine Kornfeinheit von unter 20 µm resultiert. 200 g der so hergestellten roten Harzkomponente werden mit der in Tabelle 3 angegebenen Menge der Härtungsmittel I bis X gemäss den Beispielen I bis X gemischt und anschliessend mittels Pinsel, Rolle oder heizbarer Zweikomponenten-Spritzanlage auf sandgestrahltes Stahlblech appliziert. Nach einer Härtungszeit von 7 - 10 Tagen ist der Film jeweils ausgehärtet und kann mit Methanol ("crude", rein oder wasserhaltig) belastet werden.

Die Zusammensetzung der jeweiligen Stoffgemische und die Eigenschaften der ausgehärteten Ueberzüge nach 12-monatiger Immersion im entsprechenden Lösungsmittel sind aus Tabelle 3 ersichtlich.

Tabelle 3:

| | $A_4$ | $A_5$ | $A_6$ | $A_7$ | $A_8$ | $A_9$ | $A_{10}$ | $A_{11}$ | $A_{12}$ | $A_{13}$ |
|---|---|---|---|---|---|---|---|---|---|---|
| Bisphenol A Diglycidylether (g) Epoxidgehalt 5,33 Val/kg Viskosität (25°C) 11000 mPa s | 100 | 100 | 100 | 100 | 100 | 100 | 100 | 100 | 100 | 100 |
| Eisenoxidrot | 40 | 40 | 40 | 40 | 40 | 40 | 40 | 40 | 40 | 40 |
| Bariumsulfat | 60 | 60 | 60 | 60 | 60 | 60 | 60 | 60 | 60 | 60 |
| Härter aus Beispiel I | 46 | | | | | | | | | |
| II | | 46 | | | | | | | | |
| III | | | 40 | | | | | | | |
| IV | | | | 52 | | | | | | |
| V | | | | | 46 | | | | | |
| VI | | | | | | 46 | | | | |
| VII | | | | | | | 44 | | | |
| VIII | | | | | | | | 44 | | |
| IX | | | | | | | | | 45 | |
| X | | | | | | | | | | 45 |
| Beständigkeit über 12 Monate gegen: | | | | | | | | | | |
| Methanol | 1 | 1 | 1 | 2 | 3 | 3 | 2 | 2 | 2 | 2 |
| "Methanol crude" | 1 | 1 | 1 | 2 | 3 | 3 | 2 | 2 | 2 | 2 |
| 90 % Methanol/10 % Wasser | 1 | 1 | 1 | 2 | 1 | 1 | 2 | 2 | 2 | 2 |

Legende: 1: Ueberzug unverändert; 2: Ueberzug leicht gequollen, d.h. nicht ganz so gut wie 1;
3: Ueberzug leicht erweicht, d.h. nicht so gut wie 2.

Auch die mit den Noten 2 oder 3 bewerteten Ueberzüge weisen durchaus noch eine ausreichende Beständigkeit aus, um guten Korrosionsschutz zu bieten.

Patentansprüche

1. Härtungsmittel für Epoxidharze enthaltend

(a) ein epoxidgruppenfreies Addukt, erhältlich durch Umsetzung von 3-8 Mol 4,4'-Diaminodiphenylmethan bzw. eines Anilin/Formaldehyd-Kondensationsproduktes mit 1 Mol eines oder mehrerer flüssiger aromatischer Epoxidharze auf der Basis von Bisphenol A, Bisphenol F oder eines niedermolekularen epoxidierten Phenol- oder Kresolnovolakes und

(b)(i) ein oder mehrere Amine der Formeln I oder II

$$H_2N-\!\!\left[CH_2CH_2NH\right]_n\!\!-CH_2CH_2NH_2 \text{ mit } n = 1\text{-}8 \qquad (I),$$

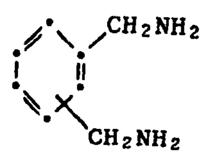

(II)

oder

(ii) ein epoxidgruppenfreies Addukt erhältlich durch Umsetzung von mindestens 2 Mol eines oder mehrerer der unter (i) definierten Amine mit 1 Mol eines unter (a) definierten Epoxidharzes,

wobei das Verhältnis der Komponenten (a) und (b) so gewählt wird, dass 60 - 90 % der Aminwasserstoffatome von der Komponente (a) und 40 - 10 % der Aminwasserstoffatome von der Komponente (b) stammen.

2. Härtungsmittel nach Anspruch 1, worin das epoxidgruppenfreie Addukt (a) durch Umsetzung von 4-7,5, insbesondere von 4,5-5,5, Mol des Amines mit 1 Mol des Epoxidharzes erhältlich ist.

3. Härtungsmittel nach Anspruch 1, worin das Epoxidharz im epoxidgruppenfreien Addukt (a) ein Harz auf der Basis von Bisphenol A ist.

4. Härtungsmittel nach Anspruch 1, worin das Amin der Komponente (b) Diethylentriamin oder m-Xylylendiamin ist.

5. Härtungsmittel nach Anspruch 1, worin das epoxidgruppenfreie Addukt (b) (ii) durch Umsetzung von 2 - 15, insbesondere von 4 - 9, Mol des Amins mit 1 Mol des Epoxidharzes erhältlich ist.

6. Härtungsmittel nach Anspruch 1, worin das Epoxidharz im epoxidgruppenfreien Addukt (b)(ii) ein Harz auf der Basis von Bisphenol A ist.

7. Härtungsmittel nach Anspruch 1, worin das Verhältnis der Komponenten (a) und (b) so gewählt wird, dass 65 - 85 %, insbesondere 75 - 85 %, der Aminwasserstoffatome von der Komponente (a) und die restlichen Aminwasserstoffatome von der Komponente (b) stammen.

8. Härtungsmittel nach Anspruch 1, welches zusätzlich zu den Komponenten (a) und (b) noch einen Härtungsbeschleuniger und/oder ein inertes, in der Lackindustrie übliches Lösungsmittel enthält.

9. Härtungsmittel nach Anspruch 8, worin der Härtungsbeschleuniger ein Phenol- oder Kresolnovolak, Bisphenol F und insbesondere Bisphenol A ist und in einer Menge von 2 - 15 Gew.%, bezogen auf das Härtungsmittel, vorliegt.

10. Härtungsmittel nach Anspruch 1, worin das epoxidgruppenfreie Addukt (a) durch Umsetzung von 4,6 bis 5,0 Mol 4,4'-Diaminodiphenylmethan mit 1 Mol eines Epoxidharzes auf der Basis von Bisphenol A erhältlich ist, und die Komponente (b)(i) m-Xylylendiamin oder (b)(ii) ein epoxidgruppenfreies Addukt, erhältlich durch Umsetzung von 7 bis 8 Mol Diethylentriamin mit einem Mol eines Epoxidharzes auf der Basis von Bisphenol A, ist.

11. Härtbares Epoxidharz-Stoffgemisch enthaltend ein Härtungsmittel nach Anspruch 1 und ein Epoxidharz.

12. Stoffgemisch nach Anspruch 11, worin das Epoxidharz ein flüssiges bis halbfestes aromatisches Epoxidharz auf der Basis von Bisphenol A, Bisphenol F oder ein epoxidierter Phenol- oder Kresolnovolak oder ein Gemisch dieser Harze ist.

13. Stoffgemisch nach Anspruch 11, worin das Verhältnis des Härtungsmittels zum Epoxidharz so gewählt wird, dass pro Epoxidgruppe des Harzes 0,8 - 1,1, insbesondere 1,0, Aminwasserstoffatome des Härtungsmittels vorliegen.

14. Verwendung des Härtungsmittels nach Anspruch 1 zusammen mit einem Epoxidharz zur Herstellung chemikalienbeständiger gehärteter Ueberzüge.

FO 7.3 SZ/cs*